# EUROPEAN PATENT SPECIFICATION

(11) **EP 2 980 702 B1**
(45) Date of publication and mention of the grant of the patent: **19.04.2017**
(21) Application number: 14179343.0
(22) Date of filing: 31.07.2014
(51) Int. Cl.: G06F 11/14, G06F 11/16, G06F 11/20

(54) **Method for enhancing the generation of a backup copy of data items of a distributed data structure, computer network for enhancing the generation of a backup copy of data items of a distributed data structure, program and computer program product**
Verfahren zur Verbesserung der Erzeugung einer Sicherungskopie von Datenelementen einer verteilten Datenstruktur, Computernetzwerk zur Verbesserung der Erzeugung einer Sicherungskopie von Datenelementen einer verteilten Datenstruktur, Programm und Computerprogrammprodukt
Procédé pour améliorer la génération d'une copie de sauvegarde de données élémentaires d'une structure de données distribuées, réseau informatique pour améliorer la génération d'une copie de sauvegarde de données élémentaires d'une structure de données distribuées, programme informatique et produit logiciel

(43) Date of publication of application: 03.02.2016
(73) Proprietor: Deutsche Telekom AG, 53113 Bonn (DE)
(72) Inventor: Agapi, Andrei, 1064CN Amsterdam (NL); Schatzmayr, Rainer, 53229 Bonn (DE)
(74) Representative: Schwöbel, Thilo K.

(56) References cited:
- WO-A2-2013/041852
- US-A1- 2012 179 723
- US-A1- 2013 218 840

## Description

### BACKGROUND

The present invention relates to a method for enhancing the generation of a backup copy of data items of a distributed data structure.

Furthermore, the present invention relates to a computer network for enhancing the generation of a backup copy of data items of a distributed data structure.

Distributed data structures are typically used to store data in a distributed manner on a number of network nodes of a computer network. In particular, the distributed data structure is realized by a distributed database system, for example by a distributed hash table (DHT) comprising key-value pairs. Each key-value pair of the key-value pairs comprises a key and a value associated with the key. The key is used by the distributed hash table (DHT) to store and/or retrieve the value associated with the key. In particular, a hash function is used to calculate the key based on a name of the object being stored.

In a distributed hash table (DHT), the key-value pairs are distributed across the computer network such that replicas (i.e. identical copies) of a key-value pairs are distributed across the number of network nodes. In addition, the distributed hash table (DHT) may further comprise interrelated key-value pairs, in particular a key-value pair and a further key-value pair being related to each other such that a write operation on the interrelated key-value pairs has to be performed in a consistent manner (for example in an update). For example, during updates consistent write operations are performed on interrelated key-value pairs with the help of transactions.

Typically, the distributed hash table (DHT) is constantly updated such that changes are applied to the key-value pairs being distributed across the network nodes of the computer network during the generation of a snapshot (or backup copy) of the content stored in the distributed hash table. However, this might lead to situations in which changes are applied only to a subset of the replicas of the same key-value pair and/or only to a subset of the interrelated key-value pairs during the generation of the backup copy of the content of the distributed hash table (DHT). In this case, the generation of the backup copy of the content of the distributed data structure is complicated by the requirement to ensure data consistency between, both, the replicas of the same key-value pair as well as between interrelated key-value pairs of the distributed hash table (DHT).

Document US2013/218840 discloses a distributed data structure for a method and system that build a point-in-time snapshot of an eventually consistent data store. The data store includes key-value pairs stored on a plurality of storage nodes. The point-in-time snapshot may be updated as any new inconsistent snapshots are generated by the data store such that the lagging consistency point associated with the updated point-in-time snapshot is more recent,

### SUMMARY

An object of the present invention is to provide a technically simple and efficient solution for enhancing the generation of a backup copy of the content of a distributed data structure, wherein data consistency is realized for the backup copy of the content of the distributed data structure, especially between interrelated data items being distributed across different network nodes of a computer network.

The object of the present invention is achieved by a method for enhancing the generation of a backup copy of data items of a distributed data structure, wherein the data items are stored on a number of network nodes of a computer network, wherein the number of network nodes include a first and a second network node, wherein the data items include a data item and a further data item, wherein the data item and the further data item are interrelated, wherein the data item is stored on the first network node, wherein the further data item is stored on the second network node, wherein the method comprises the steps of:
-- performing, by the computer network, a first transaction step, wherein the data item of the first network node is updated such that a first data item is generated, wherein the further data item of the second network node is updated such that a further first data item is generated, wherein a first transaction identifier is stored on the first and second network node, wherein the first transaction identifier is related to an identification of the first transaction step,
-- performing, by the computer network, a second transaction step, wherein the further first data item of the second network node is updated such that a further second data item is generated, wherein a second transaction identifier is stored on the second network node, wherein the second transaction identifier is related to an identification of the second transaction step,
-- performing, by the computer network, a backup step, wherein a backup copy of the first data item is generated on the first network node, wherein a further backup copy of the further second data item is generated on the second network node,
-- performing, by the computer network, a consistency step such that data consistency is realized between the backup copy and the further backup copy in dependence of the first and second transaction identifier.

It is thereby advantageously possible to provide a method for the generation of a snapshot (backup copy) of the content of the distributed data structure, wherein data consistency is realized for the data of the snapshot of the distributed data structure. According to the present invention, transaction identifiers which are related to a specific transaction step are used to realize data consistency between replicas of the same data item being distributed across different network nodes and/or between interrelated data items. Preferably, the backup copy and the further backup copy relate to different transaction levels - i.e. the further backup copy of the further second data item (on the second network nodes) is related to the second transaction step, whereas the backup copy of the first data item (on the first network node) is related to the first transaction step. Thus, the computer network is enabled - by means of using the transaction identifiers - which changes (or updates) have been made to the data items before the generation of the backup copy (in particular of the further second data item) and which changes (or updates) have been made after the backup copy (in particular of the first data item). Thereby, it is advantageously possible to provide a method for the enhanced generation of a consistent snapshot (backup copy) of the content of a distributed data structure, wherein preferably transactional semantics is enforced on the resulting snapshot.

According to the present invention, a transaction step (transaction) preferably includes an update of one or more interrelated data items in a single transaction. Preferably, transactions are used to avoid consistency errors and/or to realize all-or-nothing update semantics in the distributed data structure. Preferably, a stamping mechanism is used to store the transaction identifiers during an update of a data item. By using transaction identifiers, it is advantageously possible to perform a consistency check in the consistency step such that the consistency check is carried out after the generation of backup copies in the backup step. Preferably, the transaction identifiers are used, in the consistency check, to detect inconsistencies related to changes being applied to data items (in particular changes to replicas of the same data item as well as changes to interrelated data items). In particular, the computer network is configured to specify - for each individual update of a data item of interrelated data items involved in a composite update (transaction) - which other data item (in particular which interrelated further data item) is involved in the associated transaction.

According to the present invention, the backup copy is preferably stored on the network node and/or transmitted to another network node of the computer network for further processing, in particular for performing the consistency step, wherein the backup copy is preferably stored on the network node and/or transmitted to another network node subsequent to its generation on the network node. Preferably, in the consistency step, data consistency is realized between the backup copy and the further backup copy in dependence of the first and second transaction identifier by means of updating (in particular by modifying or replacing) the backup copy and/or further backup copy such that the backup copy and the further backup copy relate to the same transaction step.

According to a preferred embodiment of the present invention, timestamps are used for the first and second transaction identifiers, wherein the first transaction identifier is related to a first point in time, wherein the second transaction identifier is related to a second point in time, wherein the first point in time is related to the first transaction step, wherein the second point in time is related to the second transaction step.

Thereby, it is advantageously possible to perform a consistency check, wherein data consistency of the backup copy of the content of the distributed data structure is checked by means of using the timestamps. Preferably, the computer network is configured to determine, in dependence of the transaction identifier, at which point in time a data item has been modified. Preferably, it is thereby advantageously possible to realize point-in-time data consistency of the backup copy of the distributed data structure.

According to a further preferred embodiment of the present invention, point-in-time data consistency is realized between the backup copy and the further backup copy depending on a comparison of the first and second transaction identifier.

Thereby, it is advantageously possible to realize data consistency of the backup copy of the content of the distributed data structure by removing all changes being made later than a specific moment in time - in particular the beginning of the generation of the snapshot of the content of the distributed data structure. For example, in the consistency step, the further backup copy is modified such that the further backup copy and the backup copy relate to the same transaction step, if the second transaction identifier relates to a later point in time than the first transaction identifier.

According to a further preferred embodiment of the present invention, the first transaction identifier is stored on the first network node such that the first data item of the first network node is related to the first transaction identifier being stored on the first network node, wherein the first transaction identifier is stored on the second network node such that the further first data item is related to the first transaction identifier being stored on the second network node, wherein the second transaction identifier is stored on the second network node such that the further second data item is related to the second transaction identifier being stored on the second network node.

Thereby, it is advantageously possible to determine a relationship between a state of a data item stored on a network node and one or more transaction steps in which the data item has been updated. Preferably, the transaction identifier is uniquely related to a write operation. Preferably, point-in-time data consistency is realized for the backup copy of the content stored in the distributed data structure by means of using the transaction identifier in the consistency step.

According to a further preferred embodiment of the present invention, the data item comprises a reference to the further data item and/or wherein the further data item comprises a further reference to the data item, wherein, in the consistency step, a consistency check is carried out by the computer network in dependence of the reference and/or the further reference, wherein an inconsistency between the backup copies of the interrelated data items is detected, in case that transaction identifiers related to the interrelated data items are different.

Thereby, it is advantageously possible to ensure data consistency between interrelated data items, wherein the reference to the further data item and/or the further reference to the data item is preferably used in the consistency step in order to perform the consistency check. For example, an inconsistency is detected between the backup copies of the interrelated data items, in case that the transaction identifiers related to the interrelated data items relate to different transaction steps (for example different transaction levels and/or different points in time).

According to a further preferred embodiment of the present invention, data consistency is realized between the backup copy and the further backup copy in dependence of the first and second transaction identifier, wherein all updates of the data item and the further data item being performed after the first transaction step are undone.

Thereby, it is advantageously possible to generate a snapshot (backup copy) of the content of the distributed data structure, wherein data consistency is realized for the data of the snapshot of the distributed data structure, preferably by using the transaction identifiers of the data items.

According to a further preferred embodiment of the present invention, the computer network comprises at least one writer element for performing the first and second transaction step, wherein the first transaction identifier is related to exactly one writer element of the at least one writer element, wherein the second transaction identifier is related to exactly one writer element of the at least one writer element.

Thereby, it is advantageously possible to determine, for each data item, which writer element has been used for the update of the respective data item. Furthermore, it is thereby advantageously possible to determine, for interrelated data items, if the same or different writer elements have been used for the updates of the interrelated data items.

According to the present invention, a unique transaction identifier (comprising a transaction index - TID) associated with a write operation is preferably specified by the computer network, wherein the transaction index is preferably unique for each write operation. For example, the transaction index is generated by a central indexing element such as a sequencer element or by a writer element, wherein preferably an algorithm is applied that creates a sequence of transaction indexes being prefixed by a unique process identifier (process ID). Preferably, each data item of the (interrelated) data items involved in the same transaction is stamped with the transaction index (TID) and preferably with a pair of keys of the interrelated data items.

According to a further preferred embodiment of the present invention, the distributed data structure is realized by a distributed hash table (DHT), wherein each data item of the distributed hash table (DHT) comprises or implements a key-value pair, wherein generating an update of a data item of the data items in a transaction step includes:
-- attaching, to the key of the data item, the transaction identifier related to the transaction step, and
-- updating the value of the data item.

Thereby, it is advantageously possible to provide a method for enhancing the generation of a backup copy of the content stored in a distributed hash table (DHT), wherein a consistent snapshot of a distributed hash table (DHT) database is generated such that transactional semantics for interrelated key-value pairs is realized on the resulting snapshot.

According to a further preferred embodiment of the present invention, generating an update of a data item of the data items in a transaction step further includes:
-- storing, in a log file, the transaction identifier related to the transaction step, the key of the data item and a key of the further data item related to the data item.

Thereby, it is advantageously possible to use a log file of the transactions on the network nodes, wherein each network node is configured to store, in the log file an information about the transactions being performed on the respective network node.

According to a further preferred embodiment of the present invention, performing, by the computer network, the backup step includes:
-- generating, on each network node of the number of network nodes, a backup copy of the values of the data items and the log files stored on the network node,
   wherein performing, by the computer network, the consistency step includes:
-- realizing data consistency between the values of the back copies of the data items based on the information stored in the log files stored on the number of network nodes.

Thereby, it is advantageously possible to enhance the generation of the backup copy of the content of the distributed data structure such that snapshot curation is realized either on each network node, after the backup copy has been generated, or on a central network node, after collecting the backup copies and the log files from the network nodes.

Furthermore, the present invention relates to a computer network for enhancing the generation of a backup copy of data items of a distributed data structure, wherein the computer network comprises a number of network nodes, wherein the data items are stored on the number of network nodes, wherein the number of network nodes include a first and a second network node, wherein the data items include a data item and a further data item, wherein the data item and the further data item are interrelated, wherein the data item is stored on the first network node, wherein the further data item is stored on the second network node, wherein the computer network is configured to perform a first transaction step, wherein the data item of the first network node is updated such that a first data item is generated, wherein the further data item of the second network node is updated such that a further first data item is generated, wherein a first transaction identifier is stored on the first and second network node, wherein the first transaction identifier is related to an identification of the first transaction step, wherein the computer network is configured to perform a second transaction step, wherein the further first data item of the second network node is updated such that a further second data item is generated, wherein a second transaction identifier is stored on the second network node, wherein the second transaction identifier is related to an identification of the second transaction step, wherein the computer network is configured to perform a backup step, wherein a backup copy of the first data item is generated on the first network node, wherein a further backup copy of the further second data item is generated on the second network node, wherein the computer network is configured to perform a consistency step such that data consistency is realized between the backup copy and the further backup copy in dependence of the first and second transaction identifier.

It is thereby advantageously possible to provide a computer network for enhancing the generation of a snapshot of the content stored in a distributed hash table such that snapshot data consistency is realized by means of using transaction identifiers, preferably timestamps. Preferably, the transaction identifiers are related to a specific transaction step such that data consistency is realized between replicas of the same data item being distributed across different network nodes and/or between interrelated data items. Thereby, the computer network is preferably configured to determine - by means of using the transaction identifiers - which changes (or updates) have been made to the data items before the generation of the backup copy (in particular of the further second data item) and which changes (or updates) have been made after the backup copy (in particular of the first data item). Thus, a computer network is provided such that a consistent snapshot (backup copy) of the content of a distributed data structure is generated by using transactional semantics on the resulting snapshot.

According to a preferred embodiment - in particular of the computer network - of the present invention, the distributed data structure is realized by a distributed hash table (DHT), wherein each data item of the distributed hash table (DHT) comprises or implements a key-value pair, wherein the computer network is configured to update a data item of the data items in a transaction step such that
-- the transaction identifier related to the transaction step is attached to the key of the data item, and
-- the value of the data item is updated.

Thereby, it is advantageously possible to provide a computer network, wherein data consistency of the backup copy of the distributed hash table (DHT) is realized by means of using, in the consistency step, transaction identifiers (preferably timestamps) such that snapshot consistency (preferably point-in-time data consistency) is realized.

According to a further preferred embodiment - in particular of the computer network - of the present invention, the computer network comprises at least one writer element for performing the first and second transaction step, wherein the first transaction identifier is related to exactly one writer element of the at least one writer element, wherein the second transaction identifier is related to exactly one writer element of the at least one writer element.

Thereby, it is advantageously possible to determine, for each data item, which writer element has been used for the update of the data item. Furthermore, it is thereby advantageously possible to determine, for interrelated data items, if the same or different writer elements have been used for the updates of the interrelated data items.

Additionally, the present invention relates to a program comprising a computer readable program code which, when executed on a computer or on a network element of a computer network or on a plurality of network elements of the computer network, causes the computer or the network element of the computer network and/or the plurality of network elements of the computer network to perform a method according to the present invention.

Still additionally, the present invention relates to a computer program product for using a computer network, the computer program product comprising a computer program stored on a storage medium, the computer program comprising program code which, when executed on a computer or on a network element of the computer network or on a plurality of network elements of the computer network, causes the computer or the network element of the computer network and/or the plurality of network elements of the computer network to perform a method according to the present invention.

According to a preferred embodiment of the present invention, the program is a distributed program and/or the computer program of the computer program product is a distributed computer program.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a computer network for enhancing the generation of a backup copy of the content stored in a distributed data structure according to the present invention.
Figure 2 schematically illustrates a method for enhancing the generation of a backup copy of data items of a distributed data structure according to the present invention.
Figure 3 schematically illustrates data items of a distributed hash table according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

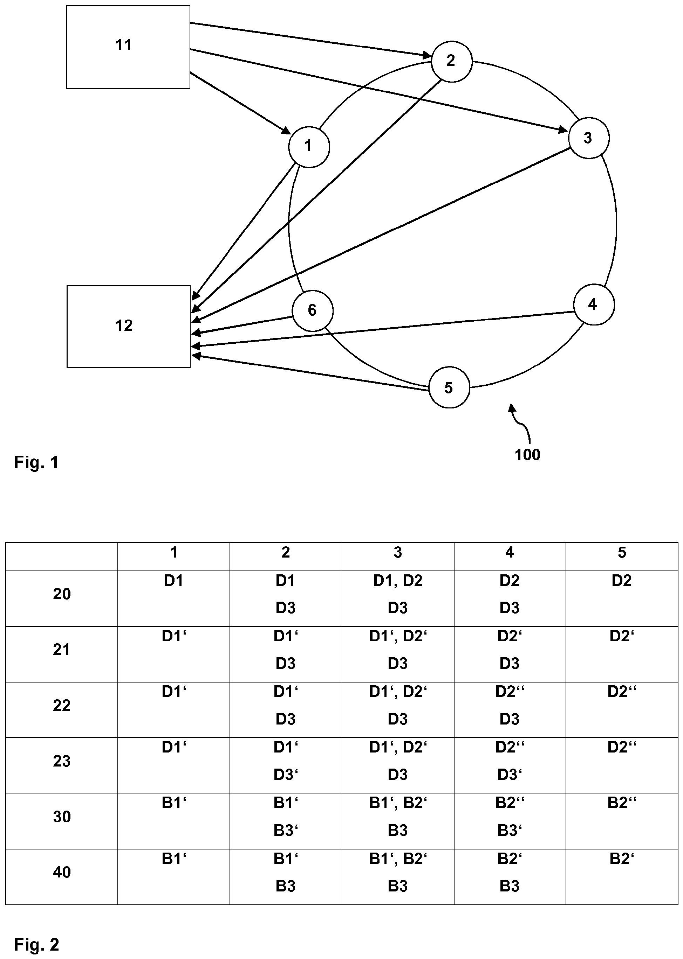

In Figure 1, a computer network 100 for enhancing the generation of a backup copy (snapshot) of the content stored in a distributed data structure according to the present invention is illustrated schematically, wherein the distributed data structure is a database system, preferably a distributed hash table (DHT). The computer network 100 comprises a number of network nodes 1, 2, 3, 4, 5, 6, wherein the number of network nodes include at least a first network node 3 and a second network node 4. The data of the distributed structure (illustrated - for example - by data items D1, D2, D3 shown in Figure 2) are distributed across the number of network nodes 1, 2, 3, 4, 5, 6. Preferably, the data items are stored redundantly on the number of network nodes 1, 2, 3, 4, 5, 6, which means that replicas of the same data item (for example data item D1) are stored on at least two different network nodes (for example network nodes 1, 2 and 3) of the number of network nodes 1, 2, 3, 4, 5, 6 of the computer network 100.

According to the present invention, the computer network 100 preferably further comprises a writer element 11, wherein the computer network 100 is configured to perform a transaction step (which is herein also called transaction) by means of using the writer element 11. Preferably, the writer element 11 instructs the number of network nodes 1, 2, 3, 4, 5, 6 to update the data items D1, D2, D3 being stored on the number of network nodes 1, 2, 3, 4, 5, 6. According to the present invention, the computer network 100 preferably still further comprises a snapshot reader 12 for reading snapshots (backup copies) of data stored on the number of network nodes 1, 2, 3, 4, 5, 6.

According to an example illustrated in Figure 1, the snapshot reader begins with a collection of backup copies being generated on the number of network nodes 1, 2, 3, 4, 5, 6 after the writer element 11 (which is also called data writer) has instructed a subset 1, 2, 3 of the number of network nodes 1, 2, 3, 4, 5, 6 to perform an update of the data item D1 being stored in the computer network 100. Here, the subset 1, 2, 3 of the number of network nodes 1, 2, 3, 4, 5, 6 have completed an update of the data item D1 stored on each of the subset 1, 2, 3 of the number of network nodes 1, 2, 3, 4, 5, 6. However, the snapshot reader 12 also collects backup copies of the data stored on the remaining network nodes 4, 5, 6 of the number of network nodes 1, 2, 3, 4, 5, 6 such that the backup copy of the content of the distributed data structure being generated by the snapshot reader 12 may comprise backup copies of the data item D1 according to different transaction levels or moments in time.

In Figure 2, a method for generating a backup copy of the content of a distributed data structure according to the present invention is illustrated schematically. The distributed data structure comprises data items D1, D2, D3 which are stored on a number of network nodes 1, 2, 3, 4, 5 of the computer network 100. The data items D1, D2, D3 are distributed, in an initial step 20, across the number of network nodes 1, 2, 3, 4, 5 as shown (see reference numeral 20 corresponding to the second row in Figure 2), wherein the initial step comprises an initial transaction and a further initial transaction. The data items D1, D2, D3 here include a data item D1, a further data item D2 und a still further data item D3. In the initial transaction, the data item D1 is provided to a first network node 3 and to the network nodes indicated by reference numerals 1 and 2 (which are herein called node 1 and node 2, respectively). In the initial transaction, also the second data item D2 is provided to the first network node 3, a second network node 4 and on a network node indicated by reference numeral 5 (which is herein called node 5). In the further initial transaction, the still further data item D3 is provided to node 2, the first network node 3 and to the second network node 4. Providing a data item to one or more network nodes preferably includes replicating the data item and/or storing the data item on the respective network node. According to the present invention, the data item D1 and the further data item D2 are interrelated, whereas the still further data item D3 is unrelated to, both, the data item D1 and the further data item D2.

According to the present invention, in a first transaction step 21 the data item D1 is updated to a first data item D1', wherein an update of the data item D1 (in particular the first data item D1') is stored on the first network node 3 and preferably on the nodes 1 and 2. Furthermore, in the first transaction step 21, the further data item D2 is updated to a further first data item D2', wherein an update of the further data item D2 (in particular the further first data item D2') is stored on the second network node 4 and preferably on the node 5 and the first network node 3. Here, the first transaction step 21 is completed, wherein the data item D1 and the further data item D2 are updated on all network nodes 1, 2, 3, 4, 5 storing a replica of the first and/or second data item D1, D2. Here, the still further data item D3 is unrelated to, both, the data item D1 and the further data item D2 such that the still further data item D3 is not updated in the first transaction step 21.

According to the present invention, a first transaction identifier is stored on the number of network nodes 1, 2, 3, 4, 5 (including the first and second network node 3, 4) on which the update according to the first transaction step 21 is completed, wherein the first transaction identifier is related to an identification of the first transaction step 21.

In a second transaction step 22, the further first data item D2' of the second network node 4 is updated such that a further second data item D2" is generated on the second network node 4. Here, the further first data item D2' of node 5 is also updated in the second transaction step 22 such that the further first data item D2' of node 5 is also updated to a further second data item D2" of node 5. Here, the still further data item D3 is unrelated to, both, the data item D1 and the further data item D2 such that the still further data item D3 is not updated in the second transaction step 22. Here, the second transaction step 22 has only been completed on nodes 4 and 5, but not on nodes 1, 2, 3 such that a second data item (not shown) corresponding to an update of the data item D1 or the first data item D1' to the second data item is inexistent in the computer network 100. Moreover, here only a further first data item D2' (but no second further data item D2") exists on the first network node 3.

According to the present invention, a second transaction identifier is stored only on the second network node 4 and preferably on node 5 (on which the update according to the second transaction step 21 is completed), wherein the second transaction identifier is related to an identification of the second transaction step 21.

Furthermore, a third transaction step 33 is shown, wherein the third transaction step 33 related to an update of only the still further data item D3 to a first still further data item D3' on node 2 and on the second network node 3, but not on the first network node 3.

According to the present invention, a third transaction identifier is stored only on node 2 and on the second network node 4 (on which the update according to the third transaction step 23 is completed), wherein the third transaction identifier is related to an identification of the third transaction step 21.

According to the present invention, a backup step 30 is performed by the computer network. A backup copy B1' of the first data item D1 is generated on the first network node 3 and preferably on nodes 1 and 2. A further backup copy B2" of the further second data item D2" is generated on the second network node 4 and preferably on node 5. However, on the first network node 3, a another backup copy B2' of the further first data item D1 is generated because the further second data item D2" is inexistent on the first network node 3. Additionally, still further backup copies B3, B3' of the still further data item D3 and the first still further data item D3' are generated on the nodes 2, 3, 4 storing the respective data items D3, D3'.

According to the present invention, data consistency is realized, in a consistency step 40, between the backup copy B1' and the further backup copy B2" in dependence of the first, second and/or third transaction identifier. In the consistency step, data consistency is checked and a curation step is preferably performed such that all backup copies of the same data item and/or backup copies of interrelated data items correspond to the same transaction identifier. Here, the first transaction identifier is determined to undo all changes to the data items D1 and D2 being made after the first transaction step 21. Thus, only backup copies B1' of the first data item D1' are used to realize the backup copy of the data structure. Furthermore, preferably only still further backup copies B3 of the still further data item D3 are used to realize the snapshot of the distributed data structure.

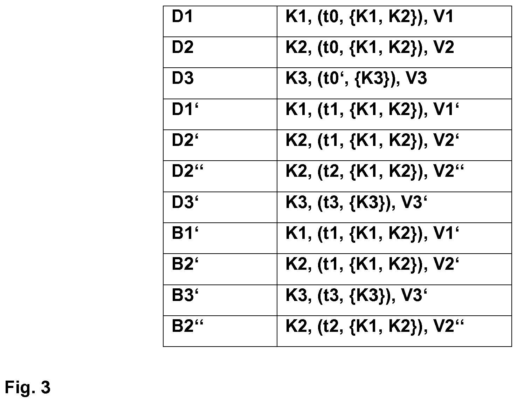

It is preferred according to the present invention that the distributed data structure is realized by a data base system implementing or comprising a distributed hash table (DHT). In Figure 3, the data items D1, D2, D3 of a distributed hash table according to the present invention are illustrated schematically, wherein the data items D1, D2, D3 are realized by key-value pairs. Here, the data item D1 initially comprises a key K1 and a value V1, the further data item D2 comprises a further key K2 and a further value V2 and the still further data item D3 comprises a still further key K3 and a still further value V3.

Preferably, the data item D1 and the further data item D2 being interrelated means that the data item D1 comprises information about a relation between the key K1 of the data item D1 and the further key K2 of the further data item D2 - for example in the form of a reference to the further key K2. Preferably, the data item D1 and the further data item D2 being interrelated further means that the further data item D2 comprises information about a relation between the key K1 of the data item D1 and the further key K2 of the further data item D2 - for example in the form of a further reference to the key K1. The still further data item D3 being unrelated to the data item D1 and the further data item D2 preferably means that the still further data item D3 only comprises a still further reference to the still further key K3 of the still further data item D3.

Additionally, the data item D1 and the further data item D2 initially comprise an initial transaction index, to, being related to the initial transaction (carried out in the initial step 20) in which the data item D1 and the further data item D2 have been generated. Still additionally, the still further data item D3 comprises a further initial transaction index, t0', being related to the further initial transaction (carried out in the initial step 20) in which the still further data item D3 has been generated.

According to the present invention, a transaction identifier is preferably realized by a timestamp being attached to a data item, wherein the transaction identifier comprises a transaction index (for example the transaction index t0). In particular, the transaction identifier also comprises an information about a relationship of a data item to other data items. For example, the transaction identifier is realized, in case of the data item D1, in the form (t0, {K1, K2}), which means that the keys K1 and K2 relate to interrelated key-value pairs (here data item D1 and the further data item D2).

The first data item D1' and the further first data item D2' are updates of the data item D1 and the further data item D2, respectively. Here, the first data item D1' and the data item D1 comprise the same key K1 but different values V1, V1' - in particular a value V1 and an updated value V1'. The further first data item D2' and the further data item D2 comprise the same further key K2 but different further values V1, V2'. Preferably, the still further first data item D3' and the still further data item D3 comprise the same key K3 but different values V3, V3'. The further second data item D2" comprises the further key K2 and a further second value V2". It is preferred according to the present invention that the initial transaction identifier of the interrelated data items D1, D2 differs from the first transaction identifier of the first interrelated data items D1', D2' in that the initial transaction identifier comprises the initial transaction index, t0, whereas the first transaction identifier comprises a first transaction index, t1. It is furthermore preferred according to the present invention that the first transaction identifier of the further first data item D2' differs from the second transaction identifier of the further second data item D2" in that the first transaction identifier comprises the initial transaction index, t1, whereas the second transaction identifier comprises a second transaction index, 2. Preferably, the backup copies B1', B2', B3' are substantially identical to the first data item D1', the further first data item D2' and the still further first data item D3'. Preferably, the further backup copy B2" is substantially identical to the further second data item D2".

Preferably, a writer process updates the values of the data stored for both keys, K1 and K2, by making write transactions against each node. Each write transaction is stamped with an unique transaction index (t2, t3, ...). For example, the transaction index is obtained by concatenating the unique process ID of the writer process with a monotonically growing local counter. In addition, the transaction is furthermore stamped with the set of keys affected by it (here {K1, K2}). Figures 2 and 3 illustrate the content stored at each node of the number of network nodes 1, 2, 3, 4, 5 after each transaction write.

It is preferred according to the present invention that a snapshot of the content stored on the number of network nodes 1, 2, 3, 4, 5 is used to make a backup of all the information stored in the distributed hash table (DHT). Preferably, a snapshot is made by instructing the number of network nodes 1, 2, 3, 4, 5 to take a copy of the values (for example values V1', V2', V2", V3, V3' in the backup step 30) for the key-value pairs (in this example of the data items D3, D1', D2', D3', D2") and all transactions logs (in particular log files comprising a set of key involved in a transaction and the corresponding transaction identifier). Preferably, a filtering step is performed, by the computer network 100, such that only transactions are used (to generate the snapshot of the DHT) which have a transaction index above a certain value.

Preferably, the backup copies generated in the backup step 30 are collected at a central network element 12 - for example at the snapshot reader element 12 shown in Figure 1. Preferably, the consistency step includes a consistency check and a snapshot curation step, wherein the consistency step is in particular based on a set of keys and transaction indexes. Preferably, the snapshot curation is made either at each node - in particular after generating backup copies in the backup step 30 - or on the resulting centralized snapshot (located on the central network element) - in particular after collection of the backup copies from the individual nodes of the number of network nodes 1, 2, 3, 4, 5. It is advantageously possible that it is ensured, by the consistency curation (in particular the snapshot curation step) that if at least one of the component updates on data items of a certain transaction is included in the snapshot, then all other subcomponent updates are also included in the snapshot, wherein this means, in particular, that all subcomponent updates of incomplete transactions are removed from the snapshot. Preferably, snapshot consistency is realized across multiple data items D1, D2, D3.

According to the present invention, it is advantageously possible that a globally consistent value for the information stored in the distributed hash table (DHT) is generated from the copied information (backup copies) by aligning the transaction indexes as well as the key sets for each transaction and by reverting the transactions that relate to incomplete transaction steps.

## Claims

1. Method for enhancing the generation of a backup copy of data items (D1, D2, D3) of a distributed data structure, wherein the data items (D1, D2, D3) are stored on a number of network nodes (1, 2, 3, 4, 5, 6) of a computer network (100), wherein the number of network nodes (1, 2, 3, 4, 5, 6) include a first and a second network node (3, 4), wherein the data items (D1, D2, D3) include a data item (D1) and a further data item (D2), wherein the data item (D1) and the further data item (D2) are interrelated, wherein the data item (D1) is stored on the first network node (3), wherein the further data item (D2) is stored on the second network node (4), wherein the method comprises the steps of:
-- performing, by the computer network (100), a first transaction step (21), wherein the data item (D1) of the first network node (3) is updated such that a first data item (D1') is generated, wherein the further data item (D2) of the second network node (4) is updated such that a further first data item (D2') is generated, wherein a first transaction identifier is stored on the first and second network node (3, 4), wherein the first transaction identifier is related to an identification of the first transaction step (21),
-- performing, by the computer network (100), a second transaction step (22), wherein the further first data item (D2') of the second network node (4) is updated such that a further second data item (D2") is generated, wherein a second transaction identifier is stored on the second network node (4), wherein the second transaction identifier is related to an identification of the second transaction step (22),
-- performing, by the computer network (100), a backup step (30), wherein a backup copy (B1') of the first data item (D1) is generated on the first network node (3), wherein a further backup copy (B2") of the further second data item (D2") is generated on the second network node (4),
-- performing, by the computer network (100), a consistency step (40) such that data consistency is realized between the backup copy (B1') and the further backup copy (B2") in dependence of the first and second transaction identifier.

2. Method according to claim 1, wherein timestamps are used for the first and second transaction identifiers, wherein the first transaction identifier is related to a first point in time, wherein the second transaction identifier is related to a second point in time, wherein the first point in time is related to the first transaction step (21), wherein the second point in time is related to the second transaction step (22).

3. Method according to one of the preceding claims, wherein point-in-time data consistency is realized between the backup copy (B1') and the further backup copy (B2") depending on a comparison of the first and second transaction identifier.

4. Method according to one of the preceding claims, wherein the first transaction identifier is stored on the first network node (3) such that the first data item (D1') of the first network node (3) is related to the first transaction identifier being stored on the first network node (3), wherein the first transaction identifier is stored on the second network node (4) such that the further first data item (D2') is related to the first transaction identifier being stored on the second network node (4), wherein the second transaction identifier is stored on the second network node (4) such that the further second data item (D2") is related to the second transaction identifier being stored on the second network node (4).

5. Method according to one of the preceding claims, wherein the data item (D1) comprises a reference to the further data item (D2) and/or wherein the further data item (D2) comprises a further reference to the data item (D1), wherein, in the consistency step (40), a consistency check is carried out by the computer network (100) in dependence of the reference and/or the further reference, wherein an inconsistency between the backup copies of the interrelated data items (D1, D2) is detected, in case that transaction identifiers related to the interrelated data items (D1, D2) are different.

6. Method according to one of the preceding claims, wherein data consistency is realized between the backup copy (B1') and the further backup copy (B2") in dependence of the first and second transaction identifier, wherein all updates of the data item (D1) and the further data item (D2) being performed after the first transaction step (21) are undone.

7. Method according to one of the preceding claims, wherein the computer network (100) comprises at least one writer element (11) for performing the first and second transaction step (21, 22), wherein the first transaction identifier is related to exactly one writer element of the at least one writer element (11), wherein the second transaction identifier is related to exactly one writer element of the at least one writer element (11).

8. Method according to one of the preceding claims, wherein the distributed data structure is realized by a distributed hash table (DHT), wherein each data item (D1, D2, D3) of the distributed hash table (DHT) comprises or implements a key-value pair, wherein generating an update of a data item (D1) of the data items (D1, D2, D3) in a transaction step includes:
-- attaching, to the key of the data item (D1), the transaction identifier related to the transaction step, and
-- updating the value of the data item (D1).

9. Method according to one of the preceding claims, wherein generating an update of a data item (D1) of the data items (D1, D2, D3) in a transaction step further includes:
-- storing, in a log file, the transaction identifier related to the transaction step, the key of the data item (D1) and a key of the further data item (D2) related to the data item (D1).

10. Method according to one of the preceding claims, wherein performing, by the computer network (100), the backup step (30) includes:
-- generating, on each network node of the number of network nodes (1, 2, 3, 4, 5, 6), a backup copy of the values of the data items (D1, D2, D3) and the log files stored on the network node,
wherein performing, by the computer network (100), the consistency step (40) includes:
-- realizing data consistency between the values of the back copies of the data items (D1, D2, D3) based on the information stored in the log files stored on the number of network nodes (1, 2, 3, 4, 5, 6).

11. Computer network (100) for enhancing the generation of a backup copy of data items (D1, D2, D3) of a distributed data structure, wherein the computer network (100) comprises a number of network nodes (1, 2, 3, 4, 5, 6), wherein the data items (D1, D2, D3) are stored on the number of network nodes (1, 2, 3, 4, 5, 6), wherein the number of network nodes (1, 2, 3, 4, 5, 6) include a first and a second network node (3, 4), wherein the data items (D1, D2, D3) include a data item (D1) and a further data item (D2), wherein the data item (D1) and the further data item (D2) are interrelated, wherein the data item (D1) is stored on the first network node (3), wherein the further data item (D2) is stored on the second network node (4), wherein the computer network (100) is configured to perform a first transaction step (21), wherein the data item (D1) of the first network node (3) is updated such that a first data item (D1') is generated, wherein the further data item (D2) of the second network node (4) is updated such that a further first data item (D2') is generated, wherein a first transaction identifier is stored on the first and second network node (3, 4), wherein the first transaction identifier is related to an identification of the first transaction step (21), wherein the computer network (100) is configured to perform a second transaction step (22), wherein the further first data item (D2') of the second network node (4) is updated such that a further second data item (D2") is generated, wherein a second transaction identifier is stored on the second network node (4), wherein the second transaction identifier is related to an identification of the second transaction step (22), wherein the computer network (100) is configured to perform a backup step (30), wherein a backup copy (B1') of the first data item (D1) is generated on the first network node (3), wherein a further backup copy (B2") of the further second data item (D2") is generated on the second network node (4), wherein the computer network (100) is configured to perform a consistency step (40) such that data consistency is realized between the backup copy (B1') and the further backup copy (B2") in dependence of the first and second transaction identifier.

12. Computer network (100) according to claim 11, wherein the distributed data structure is realized by a distributed hash table (DHT), wherein each data item (D1, D2, D3) of the distributed hash table (DHT) comprises or implements a key-value pair, wherein the computer network (100) is configured to update a data item (D1) of the data items (D1, D2, D3) in a transaction step such that
-- the transaction identifier related to the transaction step is attached to the key of the data item (D1), and
-- the value of the data item (D1) is updated.

13. Computer network (100) according to one of claims 11 or 12, wherein the computer network (100) comprises at least one writer element (11) for performing the first and second transaction step (21, 22), wherein the first transaction identifier is related to exactly one writer element of the at least one writer element (11), wherein the second transaction identifier is related to exactly one writer element of the at least one writer element (11).

14. Program comprising a computer readable program code which, when executed on a computer or on a network element (11) of a computer network (100) or on a plurality of network elements (11, 12, 1, 2, 3, 4, 5, 6) of the computer network (100), causes the computer or the network element (11) of the computer network (100) and/or the plurality of network elements (11, 12, 1, 2, 3, 4, 5, 6) of the computer network (100) to perform a method according to one of claims 1 to 10.

15. Computer program product for using a computer network (100), the computer program product comprising a computer program stored on a storage medium, the computer program comprising program code which, when executed on a computer or on a network element (11) of the computer network (100) or on a plurality of network elements (11, 12, 1, 2, 3, 4, 5, 6) of the computer network (100), causes the computer or the network element (11) of the computer network (100) and/or the plurality of network elements (11, 12, 1, 2, 3, 4, 5, 6) of the computer network (100) to perform a method according to one of claims 1 to 10.

## Patentansprüche

1. Verfahren zur Verbesserung der Erzeugung einer Sicherungskopie von Datenelementen (D1, D2, D3) einer verteilten Datenstruktur, wobei die Datenelemente (D1, D2, D3) in mehreren Netzwerkknoten (1, 2, 3, 4, 5, 6) eines Computernetzwerks (100) gespeichert sind, wobei zu den mehreren Netzwerkknoten (1, 2, 3, 4, 5, 6) ein erster und zweiter Netzwerkknoten (3, 4) zählen, wobei zu den Datenelementen (D1, D2, D3) ein Datenelement (D1) und ein weiteres Datenelement (D2) zählen, wobei das Datenelement (D1) und das weitere Datenelement (D2) miteinander zusammenhängen, wobei das Datenelement (D1) im ersten Netzwerkknoten (3) gespeichert ist, wobei das weitere Datenelement (D2) im zweiten Netzwerkknoten (4) gespeichert ist, wobei das Verfahren folgende Schritte umfasst:
-- durch das Computernetzwerk (100) einen ersten Transaktionsschritt (21) durchzuführen, wobei das Datenelement (D1) des ersten Netzwerkknotens (3) so aktualisiert wird, dass ein erstes Datenelement (D1') erzeugt wird, wobei das weitere Datenelement (D2) des zweiten Netzwerkknotens (4) so aktualisiert wird, dass ein weiteres erstes Datenelement (D2') erzeugt wird, wobei eine erste Transaktionskennung im ersten und zweiten Netzwerkknoten (3, 4) gespeichert ist, wobei die erste Transaktionskennung in Beziehung zu einer Identifikation des ersten Transaktionsschritts (21) steht,
-- durch das Computernetzwerk (100) einen zweiten Transaktionsschritt (22) durchzuführen, wobei das weitere erste Datenelement (D2') des zweiten Netzwerkknotens (4) so aktualisiert wird, dass ein weiteres zweites Datenelement (D2'') erzeugt wird, wobei eine zweite Transaktionskennung im zweiten Netzwerkknoten (4) gespeichert ist, wobei die zweite Transaktionskennung in Beziehung zu einer Identifikation des zweiten Transaktionsschritts (22) steht,
-- durch das Computernetzwerk (100) einen Sicherungsschritt (30) durchzuführen, wobei eine Sicherungskopie (B1') des ersten Datenelements (D1) im ersten Netzwerkknoten (3) erzeugt wird, wobei eine weitere Sicherungskopie (B2'') des weiteren zweiten Datenelements (D2'') im zweiten Netzwerkknoten (4) erzeugt wird,
-- durch das Computernetzwerk (100) einen Konsistenzschritt (40) so durchzuführen, dass Datenkonsistenz zwischen der Sicherungskopie (B1') und der weiteren Sicherungskopie (B2'') in Abhängigkeit von der ersten und zweiten Transaktionskennung umgesetzt wird.

2. Verfahren nach Anspruch 1, wobei Zeitstempel für die erste und die zweite Transaktionskennung verwendet werden, wobei die erste Transaktionskennung zu einem ersten Zeitpunkt in Beziehung steht, wobei die zweite Transaktionskennung zu einem zweiten Zeitpunkt in Beziehung steht, wobei der erste Zeitpunkt zum ersten Transaktionsschritt (21) in Beziehung steht, wobei der zweite Zeitpunkt zum zweiten Transaktionsschritt (22) in Beziehung steht.

3. Verfahren nach einem der vorhergehenden Ansprüche, wobei zeitpunktgenaue Datenkonsistenz zwischen der Sicherungskopie (B1') und der weiteren Sicherungskopie (B2'') abhängig von einem Vergleich der ersten und der zweiten Transaktionskennung umgesetzt wird.

4. Verfahren nach einem der vorhergehenden Ansprüche, wobei die erste Transaktionskennung im ersten Netzwerkknoten (3) so gespeichert ist, dass das erste Datenelement (D1') des ersten Netzwerkknotens (3) in Beziehung zur ersten Transaktionskennung steht, die im ersten Netzwerkknoten (3) gespeichert wird, wobei die erste Transaktionskennung so im zweiten Netzwerkknoten (4) gespeichert ist, dass das weitere erste Datenelement (D2') in Beziehung zur ersten Transaktionskennung steht, die im zweiten Netzwerkknoten (4) gespeichert wird, wobei die zweite Transaktionskennung so im zweiten Netzwerkknoten (4) gespeichert ist, dass das weitere zweite Datenelement (D2'') zur zweiten Transaktionskennung in Beziehung steht, die im zweiten Netzwerkknoten (4) gespeichert wird.

5. Verfahren nach einem der vorhergehenden Ansprüche, wobei das Datenelement (D1) einen Verweis auf das weitere Datenelement (D2) umfasst und/oder wobei das weitere Datenelement (D2) einen weiteren Verweis auf das Datenelement (D1) umfasst, wobei im Konsistenzschritt (40) eine Konsistenzprüfung durch das Computernetzwerk (100) in Abhängigkeit vom Verweis und/oder vom weiteren Verweis ausgeführt wird, wobei eine Inkonsistenz zwischen den Sicherungskopien der miteinander zusammenhängenden Datenelemente (D1, D2) detektiert wird, falls sich Transaktionskennungen, die zu den miteinander zusammenhängenden Datenelementen (D1, D2) in Beziehung stehen, unterscheiden.

6. Verfahren nach einem der vorhergehenden Ansprüche, wobei Datenkonsistenz zwischen der Sicherungskopie (B1') und der weiteren Sicherungskopie (B2'') in Abhängigkeit von der ersten und zweiten Transaktionskennung umgesetzt wird, wobei alle Aktualisierungen des Datenelements (D1) und des weiteren Datenelements (D2), die nach dem ersten Transaktionsschritt (21) durchgeführt werden, rückgängig gemacht werden.

7. Verfahren nach einem der vorhergehenden Ansprüche, wobei das Computernetzwerk (100) wenigstens ein Schreibelement (11) umfasst, um den ersten und den zweiten Transaktionsschritt (21, 22) durchzuführen, wobei die erste Transaktionskennung zu genau einem Schreibelement von dem wenigstens einen Schreibelement (11) in Beziehung steht, wobei die zweite Transaktionskennung zu genau einem Schreibelement von dem wenigstens einen Schreibelement (11) in Beziehung steht.

8. Verfahren nach einem der vorhergehenden Ansprüche, wobei die verteilte Datenstruktur durch eine verteilte Hash-Tabelle (DHT) umgesetzt ist, wobei jedes Datenelement (D1, D2, D3) der verteilten Hash-Tabelle (DHT) ein Paar Schlüsselwerte umfasst oder umsetzt, wobei das Erzeugen einer Aktualisierung eines Datenelements (D1) von den Datenelementen (D1, D2, D3) in einem Transaktionsschritt Folgendes umfasst:
-- an dem Schlüssel des Datenelements (D1) die mit dem Transaktionsschritt in Beziehung stehende Transaktionskennung anzuhängen und
-- den Wert des Datenelements (D1) zu aktualisieren.

9. Verfahren nach einem der vorhergehenden Ansprüche, wobei das Erzeugen einer Aktualisierung eines Datenelements (D1) von den Datenelementen (D1, D2, D3) in einem Transaktionsschritt weiterhin Folgendes umfasst:
-- in einer Logdatei die mit dem Transaktionsschritt in Beziehung stehende Transaktionskennung, den Schlüssel des Datenelements (D1) und einen Schlüssel des weiteren, mit dem Datenelement (D1) in Beziehung stehenden Datenelements (D2) zu speichern.

10. Verfahren nach einem der vorhergehenden Ansprüche, wobei das Durchführen durch das Computernetzwerk (100) des Sicherungsschritts (30) Folgendes umfasst:
-- in jedem Netzwerkknoten der mehreren Netzwerkknoten (1, 2, 3, 4, 5, 6) eine Sicherungskopie der Werte der Datenelemente (D1, D2, D3) und der in dem Netzwerkknoten gespeicherten Logdateien zu erzeugen,
wobei das Durchführen durch das Computernetzwerk (100) des Konsistenzschritts (40) Folgendes umfasst:
-- Datenkonsistenz zwischen den Werten der Sicherungskopien der Datenelemente (D1, D2, D3) auf Basis der Informationen umzusetzen, die in den Logdateien gespeichert sind, die in den mehreren Netzwerkknoten (1, 2, 3, 4, 5, 6) gespeichert sind.

11. Computernetzwerk (100) zur Verbesserung der Erzeugung einer Sicherungskopie von Datenelementen (D1, D2, D3) einer verteilten Datenstruktur, wobei das Computernetzwerk (100) mehrere Netzwerkknoten (1, 2, 3, 4, 5, 6) umfasst, wobei die Datenelemente (D1, D2, D3) in den mehreren Netzwerkknoten (1, 2, 3, 4, 5, 6) gespeichert sind, wobei zu den mehreren Netzwerkknoten (1, 2, 3, 4, 5, 6) ein erster und zweiter Netzwerkknoten (3, 4) zählen, wobei zu den Datenelementen (D1, D2, D3) ein Datenelement (D1) und ein weiteres Datenelement (D2) zählen, wobei das Datenelement (D1) und das weitere Datenelement (D2) miteinander zusammenhängen, wobei das Datenelement (D1) im ersten Netzwerkknoten (3) gespeichert ist, wobei das weitere Datenelement (D2) im zweiten Netzwerkknoten (4) gespeichert ist, wobei das Computernetzwerk (100) dazu ausgelegt ist, einen ersten Transaktionsschritt (21) durchzuführen, wobei das Datenelement (D1) des ersten Netzwerkknotens (3) so aktualisiert wird, dass ein erstes Datenelement (D1') erzeugt wird, wobei das weitere Datenelement (D2) des zweiten Netzwerkknotens (4) so aktualisiert wird, dass ein weiteres erstes Datenelement (D2') erzeugt wird, wobei eine erste Transaktionskennung im ersten und zweiten Netzwerkknoten (3, 4) gespeichert ist, wobei die erste Transaktionskennung in Beziehung zu einer Identifikation des ersten Transaktionsschritts (21) steht, wobei das Computernetzwerk (100) dazu ausgelegt ist, einen zweiten Transaktionsschritt (22) durchzuführen, wobei das weitere erste Datenelement (D2') des zweiten Netzwerkknotens (4) so aktualisiert wird, dass ein weiteres zweites Datenelement (D2'') erzeugt wird, wobei eine zweite Transaktionskennung im zweiten Netzwerkknoten (4) gespeichert ist, wobei die zweite Transaktionskennung in Beziehung zu einer Identifikation des zweiten Transaktionsschritts (22) steht, wobei das Computernetzwerk (100) dazu ausgelegt ist, einen Sicherungsschritt (30) durchzuführen, wobei eine Sicherungskopie (B1') des ersten Datenelements (D1) im ersten Netzwerkknoten (3) erzeugt wird, wobei eine weitere Sicherungskopie (B2'') des weiteren zweiten Datenelements (D2'') im zweiten Netzwerkknoten (4) erzeugt wird, wobei das Computernetzwerk (100) dazu ausgelegt ist, einen Konsistenzschritt (40) so durchzuführen, dass Datenkonsistenz zwischen der Sicherungskopie (B1') und der weiteren Sicherungskopie (B2'') in Abhängigkeit von der ersten und zweiten Transaktionskennung umgesetzt wird.

12. Computernetzwerk (100) nach Anspruch 11, wobei die verteilte Datenstruktur durch eine verteilte Hash-Tabelle (DHT) umgesetzt ist, wobei jedes Datenelement (D1, D2, D3) der verteilten Hash-Tabelle (DHT) ein Paar Schlüsselwerte umfasst oder umsetzt, wobei das Computernetzwerk (100) dazu ausgelegt ist, ein Datenelement (D1) von den Datenelementen (D1, D2, D3) in einem Transaktionsschritt so zu aktualisieren, dass
-- die in Beziehung zum Transaktionsschritt stehende Transaktionskennung an den Schlüssel des Datenelements (D1) angehängt wird und
-- der Wert des Datenelements (D1) aktualisiert wird.

13. Computernetzwerk (100) nach einem der Ansprüche 11 oder 12, wobei das Computernetzwerk (100) wenigstens ein Schreibelement (11) umfasst, um den ersten und den zweiten Transaktionsschritt (21, 22) durchzuführen, wobei die erste Transaktionskennung zu genau einem Schreibelement von dem wenigstens einen Schreibelement (11) in Beziehung steht, wobei die zweite Transaktionskennung zu genau einem Schreibelement von dem wenigstens einen Schreibelement (11) in Beziehung steht.

14. Programm, das einen computerlesbaren Programmcode umfasst, der, wenn er auf einem Computer oder auf einem Netzwerkelement (11) eines Computernetzwerks (100) oder auf mehreren Netzwerkelementen (11, 12, 1, 2, 3, 4, 5, 6) des Computernetzwerks (100) ausgeführt wird, bewirkt, dass der Computer oder das Netzwerkelement (11) des Computernetzwerks (100) und/oder die mehreren Netzwerkelemente (11, 12, 1, 2, 3, 4, 5, 6) des Computernetzwerks (100) ein Verfahren gemäß einem der Ansprüche 1 bis 10 durchführen.

15. Computerprogrammprodukt zum Verwenden eines Computernetzwerks (100), wobei das Computerprogrammprodukt ein Computerprogramm umfasst, das auf einem Speichermedium gespeichert ist, wobei das Computerprogramm Programmcode umfasst, der, wenn er auf einem Computer oder auf einem Netzwerkelement (11) des Computernetzwerks (100) oder auf mehreren Netzwerkelementen (11, 12, 1, 2, 3, 4, 5, 6) des Computernetzwerks (100) ausgeführt wird, bewirkt, dass der Computer oder das Netzwerkelement (11) des Computernetzwerks (100) und/oder die mehreren Netzwerkelemente (11, 12, 1, 2, 3, 4, 5, 6) des Computernetzwerks (100) ein Verfahren gemäß einem der Ansprüche 1 bis 10 durchführen.

## Revendications

1. Procédé pour améliorer la génération d'une copie de sauvegarde d'éléments de données (D1, D2, D3) d'une structure de données distribuée, dans lequel les éléments de données (D1, D2, D3) sont stockés sur un certain nombre de noeuds de réseau (1, 2, 3, 4, 5, 6) d'un réseau informatique (100), dans lequel le nombre de noeuds de réseau (1, 2, 3, 4, 5, 6) comprend un premier et un second noeud de réseau (3, 4), dans lequel les éléments de données (D1, D2, D3) comprennent un élément de données (D1) et un autre élément de données (D2), dans lequel l'élément de données (D1) et l'autre élément de données (D2) sont interdépendants, dans lequel l'élément de données (D1) est stocké sur le premier noeud de réseau (3), dans lequel l'autre élément de données (D2) est stocké sur le second noeud de réseau (4), dans lequel le procédé comprend les étapes consistant à :
-- exécuter, par le réseau informatique (100), une première étape de transaction (21), dans laquelle l'élément de données (D1) du premier noeud de réseau (3) est mis à jour de telle sorte qu'un premier élément de données (D1') est généré, dans laquelle l'autre élément de données (D2) du second noeud de réseau (4) est mis à jour de telle sorte qu'un autre premier élément de données (D2') est généré, dans laquelle un premier identificateur de transaction est stocké sur les premier et second noeuds de réseau (3, 4), dans laquelle le premier identificateur de transaction est lié à une identification de la première étape de transaction (21),
-- exécuter, par le réseau informatique (100), une seconde étape de transaction (22), dans laquelle l'autre premier élément de données (D2') du second noeud de réseau (4) est mis à jour de telle sorte qu'un autre second élément de données (D2") est généré, dans laquelle un second identificateur de transaction est stocké sur le second noeud de réseau (4), dans laquelle le second identificateur de transaction est lié à une identification de la seconde étape de transaction (22),
-- exécuter, par le réseau informatique (100), une étape de sauvegarde (30), dans laquelle une copie de sauvegarde (B1') du premier élément de données (D1) est générée sur le premier noeud de réseau (3), dans laquelle une autre copie de sauvegarde (B2") de l'autre second élément de données (D2") est générée sur le second noeud de réseau (4),
-- exécuter, par le réseau informatique (100), une étape de cohérence (40), de telle sorte qu'une cohérence de données est réalisée entre la copie de sauvegarde (B1') et l'autre copie de sauvegarde (B2") en fonction du premier et du second identificateur de transaction.

2. Procédé selon la revendication 1, dans lequel des horodatages sont utilisés pour les premier et second identificateurs de transaction, dans lequel le premier identificateur de transaction est lié à un premier point dans le temps, dans lequel le second identificateur de transaction est lié à un second point dans le temps, dans lequel le premier point dans le temps est lié à la première étape de transaction (21), dans lequel le second point dans le temps est lié à la seconde étape de transaction (22).

3. Procédé selon l'une des revendications précédentes, dans lequel une cohérence de données ponctuelles est réalisée entre la copie de sauvegarde (131') et l'autre copie de sauvegarde (B2") en fonction d'une comparaison des premier et second identificateurs de transaction.

4. Procédé selon l'une des revendications précédentes, dans lequel le premier identificateur de transaction est stocké sur le premier noeud de réseau (3) de telle sorte que le premier élément de données (D1') du premier noeud de réseau (3) est lié au premier identificateur de transaction stocké sur le premier noeud de réseau (3), dans lequel le premier identificateur de transaction est stocké sur le second noeud de réseau (4) de sorte que l'autre premier élément de données (D2') est lié au premier identificateur de transaction stocké sur le second noeud de réseau (4), dans lequel le second identificateur de transaction est stocké sur le second noeud de réseau (4) de telle sorte que l'autre second élément de données (D2") est lié au second identificateur de transaction stocké sur le second noeud de réseau (4).

5. Procédé selon l'une des revendications précédentes, dans lequel l'élément de données (D1) comprend une référence à l'autre élément de données (D2) et/ou dans lequel l'autre élément de données (D2) comprend une autre référence à l'élément de données (D1), dans lequel, dans l'étape de cohérence (40), une vérification de cohérence est effectuée par le réseau informatique (100) en fonction de la référence et/ou de l'autre référence, dans lequel une incohérence entre les copies de sauvegarde des éléments de données interdépendants (D1, D2) est détectée, dans le cas où des identificateurs de transaction liés aux éléments de données interdépendants (D1, D2) sont différents.

6. Procédé selon l'une des revendications précédentes, dans lequel une cohérence de données est réalisée entre la copie de sauvegarde (B1') et l'autre copie de sauvegarde (B2") en fonction du premier et du second identificateur de transaction, dans lequel toutes les mises à jour de l'élément de données (D1) et de l'autre élément de données (D2) qui sont exécutées après la première étape de transaction (21) sont annulées.

7. Procédé selon l'une des revendications précédentes, dans lequel le réseau informatique (100) comprend au moins un élément d'écriture (11) pour exécuter les première et seconde étapes de transaction (21, 22), dans lequel le premier identificateur de transaction est lié précisément à un élément d'écriture dudit au moins un élément d'écriture (11), dans lequel le second identificateur de transaction est lié précisément à un élément d'écriture dudit au moins un élément d'écriture (11).

8. Procédé selon l'une quelconque des revendications précédentes, dans lequel la structure de données distribuée est réalisée par une table de hachage distribuée (DHT), dans lequel chaque élément de données (D1, D2, D3) de la table de hachage distribuée (DHT) comprend ou met en oeuvre une paire de valeurs clés, dans lequel la génération d'une mise à jour d'un élément de données (D1) des éléments de données (D1, D2, D3) dans une étape de transaction comprend de :
-- joindre, à la clé de l'élément de données (D1), l'identificateur de transaction lié à l'étape de transaction, et
-- mettre à jour la valeur de l'élément de données (D1).

9. Procédé selon l'une des revendications précédentes, dans lequel la génération d'une mise à jour d'un élément de données (D1) des éléments de données (D1, D2, D3) dans une étape de transaction comprend en outre de :
-- stocker, dans un fichier journal, l'identificateur de transaction lié à l'étape de transaction, la clé de l'élément de données (D1) et une clé de l'autre élément de données (D2) lié à l'élément de données (D1).

10. Procédé selon l'une quelconque des revendications précédentes, dans lequel l'exécution, par le réseau informatique (100), de l'étape de sauvegarde (30) comprend de :
-- générer, sur chaque noeud de réseau du certain nombre de noeuds de réseau (1, 2, 3, 4, 5, 6), une copie de sauvegarde des valeurs des éléments de données (D1, D2, D3) et des fichiers journaux stockés sur le noeud de réseau,
dans lequel l'exécution, par le réseau informatique (100), de l'étape de cohérence (40) comprend de :
-- réaliser une cohérence des données entre les valeurs des copies de sauvegarde des éléments de données (D1, D2, D3) sur la base des informations stockées dans les fichiers journaux stockés sur le certain nombre de noeuds de réseau (1, 2, 3, 4, 5, 6).

11. Réseau informatique (100) pour améliorer la génération d'une copie de sauvegarde d'éléments de données (D1, D2, D3) d'une structure de données distribuée, dans lequel le réseau informatique (100) comprend un certain nombre de noeuds de réseau (1, 2, 3, 4) , 5, 6), dans lequel les éléments de données (D1, D2, D3) sont stockés sur le nombre de noeuds de réseau (1, 2, 3, 4, 5, 6), dans lequel le nombre de noeuds de réseau (1, 2, 3, 4, 5, 6) comprend un premier et un second noeud de réseau (3, 4), dans lequel les éléments de données (D1, D2, D3) comprennent un élément de données (D1) et un autre élément de données (D2), dans lequel l'élément de données (D1) et l'autre élément de données (D2) sont interdépendants, dans lequel l'élément de données (D1) est stocké sur le premier noeud de réseau (3), dans lequel l'autre élément de données (D2) est stocké sur le second noeud de réseau (4), dans lequel le réseau informatique (100) est configuré pour exécuter une première étape de transaction (21), dans laquelle l'élément de données (D1) du premier noeud de réseau (3) est mis à jour de telle sorte qu'un premier élément de données (D1') est généré, dans laquelle l'autre élément de données (D2) du second noeud de réseau (4) est mis à jour de telle sorte qu'un autre premier élément de données (D2') est généré, dans laquelle un premier identificateur de transaction est stocké sur les premier et second noeuds de réseau (3, 4), dans laquelle le premier identificateur de transaction est lié à une identification de la première étape de transaction (21), dans lequel le réseau informatique (100) est configuré pour exécuter une seconde étape de transaction (22), dans laquelle l'autre premier élément de données (D2') du second noeud de réseau (4) est mis à jour de telle sorte qu'un autre second élément de données (D2") est généré, dans laquelle un second identificateur de transaction est stocké sur le second noeud de réseau (4), dans laquelle le second identificateur de transaction est lié une identification de la seconde étape de transaction (22), dans lequel le réseau informatique (100) est configuré pour exécuter une étape de sauvegarde (30), dans laquelle une copie de sauvegarde (B1') du premier élément de données (D1) est générée sur le premier noeud de réseau (3), dans laquelle une autre copie de sauvegarde (B2") de l'autre second élément de données (D2") est générée sur le second noeud de réseau (4), dans lequel le réseau informatique (100) est configuré pour effectuer une étape de cohérence (40) de telle sorte qu'une cohérence de données est réalisée entre la copie de sauvegarde (B1') et l'autre copie de sauvegarde (B2") en fonction du premier et du second identificateur de transaction.

12. Réseau informatique (100) selon la revendication 11, dans lequel la structure de données distribuée est réalisée par une table de hachage distribuée (DHT), dans lequel chaque élément de données (D1, D2, D3) de la table de hachage distribuée (DHT) comprend ou met en oeuvre une paire de valeurs clés, dans lequel le réseau informatique (100) est configuré pour mettre à jour un élément de données (D1) des éléments de données (D1, D2, D3) dans une étape de transaction de telle sorte que
-- l'identificateur de transaction lié à l'étape de transaction est joint à la clé de l'élément de données (D1), et
-- la valeur de l'élément de données (D1) est mise à jour.

13. Réseau informatique (100) selon l'une des revendications 11 ou 12, dans lequel le réseau informatique (100) comprend au moins un élément d'écriture (11) pour exécuter les première et seconde étapes de transaction (21, 22), dans lequel le premier identificateur de transaction est lié précisément à un élément d'écriture dudit au moins un élément d'écriture (11), dans lequel le second identificateur de transaction est lié précisément à un élément d'écriture dudit au moins un élément d'écriture (11).

14. Programme comprenant un code de programme lisible par ordinateur qui, lorsqu'il est exécuté sur un ordinateur ou sur un élément de réseau (11) d'un réseau informatique (100) ou sur une pluralité d'éléments de réseau (11, 12, 1, 2, 3, 4, 5, 6) du réseau informatique (100), amène l'ordinateur ou l'élément de réseau (11) du réseau informatique (100) et/ou la pluralité d'éléments de réseau (11, 12, 1, 2, 3, 4, 5, 6) du réseau informatique (100) à exécuter un procédé selon l'une des revendications 1 à 10.

15. Produit de programme informatique pour utiliser un réseau informatique (100), le produit de programme informatique comprenant un programme informatique stocké sur un support de stockage, le programme informatique comprenant un code de programme qui, lorsqu'il est exécuté sur un ordinateur ou sur un élément de réseau (11) du réseau informatique (100) ou sur une pluralité d'éléments de réseau (11, 12, 1, 2, 3, 4, 5, 6) du réseau informatique (100), amène l'ordinateur ou l'élément de réseau (11) du réseau informatique (100) et/ou la pluralité d'éléments de réseau (11, 12, 1, 2, 3, 4, 5, 6) du réseau informatique (100) à exécuter un procédé selon l'une des revendications 1 à 10.
